# EUROPEAN PATENT APPLICATION

(11) **EP 4 760 334 A2**
(43) Date of publication of application: **17.06.2026**
(21) Application number: 25214244.3
(22) Date of filing: 07.11.2025
(51) Int. Cl.: G01S 1/14, G01S 1/16, G01S 5/02

(54) **WIRELESS BROADCAST BASED LOCATION GUIDANCE**

(30) Priority: 12.12.2024 US 202418978946
(71) Applicant: INTEL Corporation, Santa Clara, CA 95054 (US)
(72) Inventor: SINGH, Balvinder Pal, 490020 Chhattisgar, Bhilai (IN); LAWRENCE, Sean J. W., 560066 Bangalore (IN); MITTY, Harish, 560097 Bangalore (IN); THAKUR, Jayprakash, 560035 Bangalore (IN); BANAVARA, Prasanna Ramarao, 450078 Bangalore, Karnataka (IN); MASTI, Sandeep, 560103 Bangalore (IN); KAPILA, Smit, 560102 Bangalore, Karnataka (IN)
(74) Representative: Goddar, Heinz J.

(57) **Abstract**

Various embodiments herein provide techniques related to electronic device. The electronic device may be configured to store one or more broadcast audio signals received from a broadcast transmitter; identify, based on the one or more broadcast audio signals, a location of the electronic device with respect to the broadcast transmitter; and provide an indication of the location of the electronic device. Other embodiments may be described and/or claimed.

## Description

### BACKGROUND

In a given spatial location, the current map of the place, presence of obstacles, objects, and devices may be used to guide an entity such as an agent, a device, or a human. In some legacy configurations, to generate a map for a given space, complex and static multi-device setups may be used. These setups may generally be a compute-intensive system of systems, and may rely on techniques such as triangulation and/or other visual/image processing, thereby restricting the usage in wider deployments and reducing scalability.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 illustrates an example of occluded path markings, in accordance with various embodiments.
Figure 2 illustrates an example of an audio broadcast funnel, in accordance with various embodiments.
Figure 3 illustrates an example of time-staggered tones, in accordance with various embodiments.
Figure 4 illustrates an example of local detection of target closeness, in accordance with various embodiments.
Figure 5 illustrates an example of local detection of target closeness in the presence of a blocking element, in accordance with various embodiments.
Figure 6 illustrates an example electronic device, in accordance with various embodiments herein.
Figure 7 illustrates an example process related to various embodiments herein.
Figure 8 illustrates an alternative example process related to various embodiments herein.
Figure 9 illustrates an alternative example process related to various embodiments herein.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

Embodiments herein may relate to a context-agnostic application or a service running on a device that has wireless capabilities to receive broadcast streams. For the sake of non-limiting example and discussion herein, such broadcast streams are described with reference to Bluetooth. However, it will be understood that other embodiments may additionally or alternative include or relate to a different wireless protocol such as cellular wireless data (e.g., such as may be based on the third generation partnership project (3GPP) standards), Wi-Fi, and/or some other wireless protocol as may currently exist or be developed in the future.

Non-limiting examples of such devices may be or include a handheld device such as a tablet, smartphone, personal digital assistant (PDA); a personal computer (PC) or laptop; an earbud, headset, or neckband; etc. Such devices may similarly or alternatively operate as a transmitter herein that is configured to transmit one or more Bluetooth-broadcast streams. Such a device may be or include, for example, a tablet, a smartphone, a PDA, a PC, a laptop, or a dedicated electronic device (e.g., a dedicated Bluetooth transmitter).

The application or service in accordance with embodiments herein may bring capabilities for a local device to achieve one or more of the following:
- Low complexity compute for precise location detection without requiring the use of a cellular network, a satellite network, or some other compute resource-intensive technology.
- The local device may be enabled to identify its location in a given area by using sounding radio funnels. As used herein, and as explained in greater detail below, the term "sounding radio funnels" may refer to a plurality of overlapping radio funnels that are differentiated by characteristics such as signal frequency, signal amplitude, signal pattern, time, and/or some other additional or alternative characteristic.
- Embodiments may enable a connectionless scheme that is operable without the use of resource-intense triangulation algorithms or use of round-trip time (RTT) calculations.

Embodiments may provide one or more of the following example advantages in various use cases: low complexity devices, location detection, a connectionless/wireless configuration, audio-based separation, contextual scalability, user device self-detection, device category agnostism, security (i.e., data is not required to be exchanged between transmitters and receivers for an embodiment to operate correctly), application-specific usage adaptions are possible (e.g., usage under multiple environments and/or multiple scenarios)

Embodiments herein may be related to a variety of use cases. One such use case may be for visually impaired subjects trying to reach a given location. Another use case may relate to spatial-mapping for head-mounted extended reality (XR)/augmented reality (AR)/virtual reality (VR) multi-user game experiences. Another use case may relate to calibration of a home theater system based on the presence of speakers and/or sitting/viewing location of an audience. Another use case may relate to an emergency situation where one or more hurdles or visual occlusions are located between a user and an exit point. Another use case may relate to a user being lost in a location without a cellular network. Other use cases may be envisioned based on situations where the user does not have access to a map, and desires to be made aware of a spatial map of the user's location.

Embodiments may relate to or include a guidance system that provides a relatively simple, fast, and precise wireless connectionless mechanism to detect and inform one or more receivers (user devices) their own location and/or terrain details. In embodiments, one or more radio signals may be received and used by one or more receivers in a given location. The receivers may then be able to decipther/identify their own position relative to the terrain and/or the transmitter.

In contrast to legacy configuration that use techniques such as radio triangulation, embodiments herein may use radio/audio beamforming to create sounding radio funnels in a given space/location. The sounding radio funnels may allow the receivers to identify their own location with a local computation that is less resource intensive than, e.g., radio triangulation.

In some embodiments, the sounding radio funnels may be based on the use of Bluetooth low energy (LE). In some embodiments, the Bluetooth LE signals may be audio signals, which may be referred to as "Auracast." In some embodiments, the Bluetooth LE signals may be based on the Bluetooth 5.2+ specification as defined by the Bluetooth special interest group (SIG) and may be desirable due to its inherent connectionless, low latency, and ubiquitous nature. In other embodiments, the sounding radio funnels may be based on some other wireless protocol.

Generally, embodiments may use a system that includes a transmitter and one or more receivers that are within radio range of the transmitter. The transmitter may include one or more antenna arrays, a single antenna, dual antennas, etc., and may create create LE Audio Broadcast beamforming funnels. The content of the beam may be identifiable using content such as LE Audio Tone content and/or musicial instrument digital interface (MIDI) content that is placed on one or more channels of the transmitted signal.

To put it another way, the transmitter may transmit one or more wireless signals that have an identifiable audio component (e.g., one or more tones or frequencies broadcast with a known amplitude). As such, the different tones (referred to below as, for example, "T1," "T2," "T3," etc.) may be identifiable based on said audio component. For example, the different signals may be identifiable from one another based on a frequency of the signal, an amplitude of the signal, a pattern of the signal, etc. In other embodiments, the different signals may be identifiable based on a time of transmission and/or a time of receipt of the signal.

In this manner, a receiver that is running a lightweight application (e.g., an application with relatively low processing power) may be able to make calculations regarding a distance of the receiver from the broadcast transmitter based on the various received tones. Such an application is described as "lightweight" as compared to, for example, a more compute-intensive application such as that which may be required to decode data of one or more of the received signals and then perform one or more calculations on the decoded data.In some embodiments, prior to transmission of the signal(s), the receiver and the transmitter may wirelessly synchronize with each other with respect to one or more time characteristics and/or frequency characteristics with which the signal(s) is/are to be transmitted.

It will be understood that embodiments herein are described with respect to use of Bluetooth, and particularly Bluetooth LE, as the broadcast signal. However, in other embodiments, some other type of signal may be used (e.g., Wi-Fi and/or some other signal). Additionally, embodiments herein are described with respect to audio feedback being provided to a user of the receiver to assist the user with positioning. However, in other embodiments, the feedback may additionally or alternatively take the form of haptic feedback, visual feedback (e.g., via one or more lights of the receiver), or some other type of feedback.

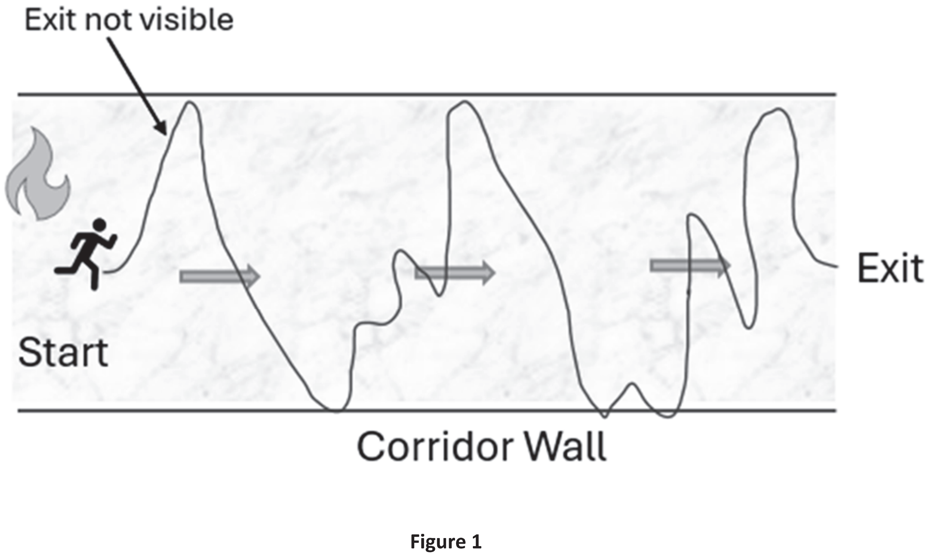

Figure 1, below, illustrates an example use case of embodiments herein. Specifically, Figure 1 shows start and exit paths in an example fire situation where the person wants to reach the Exit point from the Start point, and the Exit is occluded (e.g., not visible) due to smoke or other reasons in the example. As such, rather than following a straight line from the Start point to the Exit point, the individual may following a staggered line where the person may collide with the wall of a corridor multiple times. Such collisions may result in injury and/or the loss of valuable time in the emergent situation. As such, embodiments herein may relate to the use of an audio transmitter at the Exit to broadcast one or more sounding radio funnels.

### BLUETOOTH LE SOUNDING RADIO FUNNELS AT THE TRANSMITTER

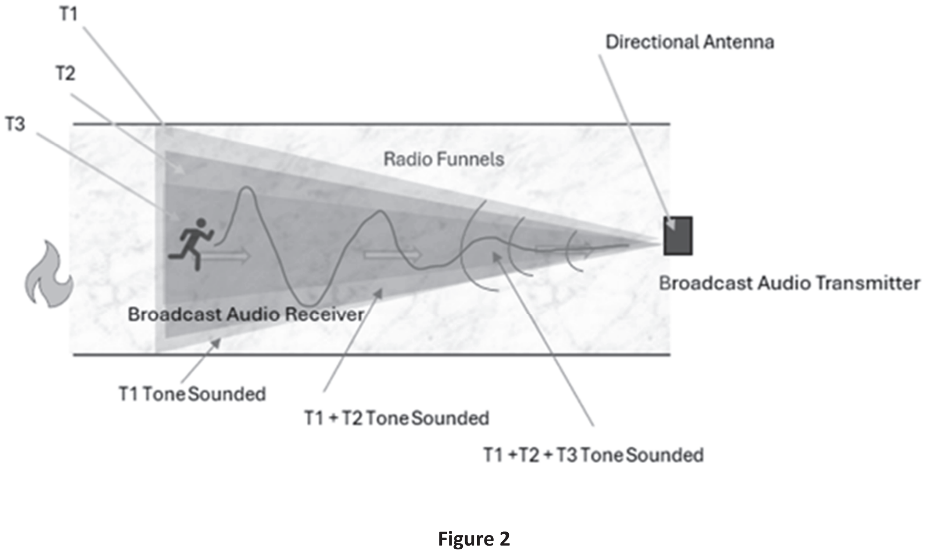

Generally, a sounding radio funnel may have a direction field of view. Figure 2 depicts As can be seen in the example of Figure 2, there may be 3 LE Audio broadcasted funnels that are created by one or more transmitters. Each of the funnels may have funnels that at least partially overlap one another. Specifically, respective ones of the funnels may have a field of view of approximately 60 degrees, approximately 40 degrees, and approximately 20 degrees.

Respective ones of the funnels may carry an audio signal, a MIDI signal, and/or some other type of audio content that uniquely identifies the funnel (e.g., based on different tones, identifiers, frequencies, etc.) In Figure 2, the funnel with a 60-degree field of view may broadcast audio tone T1. The funnel with a 40-degree field of view may broadcast audio tone T2. The funnel with a 20-degree field of view may broadcast audio tone T3. In this embodiment, it may be the case that the innermost funnel (e.g., the funnel with audio tone T3) represents the closest configuration to a desired path between the user and the "exit" of the corridor (at which the transmitter may be placed).

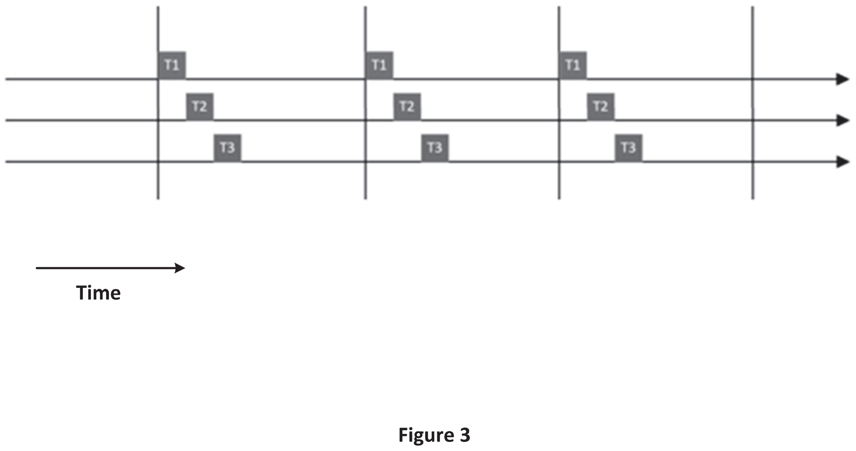

In some embodiments, rather than being differentiated by signal content or format, the different audio signals may be separated in time. For example, the receiver(s) and the transmitter may be calibrated to one another in time, and the transmitter may broadcast the different audio tones T1, T2, and T3 at different times. Based on the different transmit times, the tone(s) may be received by the receiver at different times, and the receiver may then be configured to identify the different tones based on their time of arrival. Figure 3 depicts an example of the tones T1-T3 being broadcast at different times.

### EXAMPLE RECEIVER FUNCTIONS

In embodiments, a receiver may be configured to automatically, manually, and/or semi-manually enable support for receipt of the broadcast audio synchronized signal. As noted, the 3 tones (T1, T2, and T3) may overlap in space as shown in Figure 2. As such, the receivers may be configured to identify its location based on which tones are received.

As a specific example, if the receiver is present in the outermost funnel (with the ~60-degree field of view) of Figure 2, the receiver may only identify T1. If the receiver is present in the intermediate funnel (with the ~40 degree field of view), then the receiver may identify T1 and T2. If the receiver is present in the innermost funnel (with the ~20 degree field of view), then the receiver may identify T1, T2, and T3.

Hence, the logic inside the receiver, which may be a local relatively lightweight application and/or operating system (OS) service, may be configured to identify, based on the tones, the location of the receiver with respect to the transmitter. Such location information may be, for example, a distance of the receiver from the transmitter. In some embodiments the location information may further include information related to a distance of the receiver from the "desired" path to, for example, where the transmitter may be located. For example, if the receiver is only receiving tone T1, then the receiver may be further from the desired path than if the receiver were receiving one or more tones including tone T3 in Figure 2.

Based on this location information, the receiver may be configured to provide feedback to a user via, for example, audio playback. Such playback may be via a speaker of the receiver, wireless earbuds coupled with the receiver, wired earbuds, a headset, etc. In other embodiments, the feedback provided to the user may be via haptic feedback (e.g., the device may vibrate with different intensities or patterns dependent on which tone(s) is/are received), visual feedback (e.g., different words or phrases, or cues such as arrows or different colours), etc.

If a user sways away from the sounding radio funnel where the user receives tones T1, T2, and T3 (which may assumed for this example to be the "target" path that the user is to take), the feedback provided to the user may change. In some embodiments, the detection logic running in the receiver may identify that the deviation is occurring and alert the user (e.g., via an audio signal, haptic feedback, a visual feedback, etc.).

### EXAMPLE OF USE OF TONE VOLUME TO IDENTIFY LOCATION

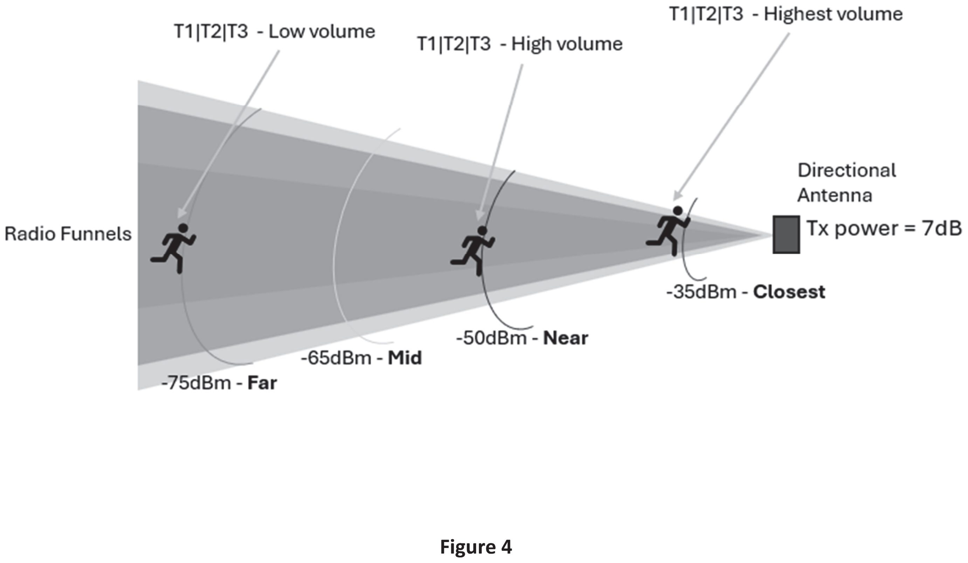

Detection of where the receiver is in the Funnel may be identified by the different tones as previously explained with respect to Figures 2 and 3. In some embodiments, detection of how close the receiver is to the transmitter may be done using a signal strength measurement such as received signal strength indicator (RSSI) of the received tones. An example of this measurement and technique may be seen in Figure 4.

### Target / Alert RSSI =>

In the example of Figure 4, the receiver may identify (e.g., through dynamic signaling, preconfiguration, etc.) that the receiver is within a given range that is adjacent to or close to (e.g., within 1-2 meters, though in other embodiments, the range may be higher or lower) the transmitter based on a received signal strength. In the example of Figure 4, the signal strength is -35 decibels-milliwatt (dBm). Once the receiver detects this signal strength, the receiver may alert the user that the user is within the range of the transmitter. In some embodiments, the receiver may additionally/alternatively be configured to identify that a target is in the way that may be obstructing or decreasing the signal.

### Initial Transmit Power on Transmitter =>

In some cases, the receiver may be configured to identify (e.g., through dynamic signaling, preconfiguration, etc.) an initial transmit power for one or more of the funnels. In some cases, the initial transmit power may be the same for each funnel, while in other embodiments the initial transmit power for one funnel may be different than the transmit power for another funnel. Based on this information and a measurement of received signal strength (e.g., an RSSI measurement), the receiver may be configured to identify how close or far the receiver is from the transmitter.

### RECEIVERS IDENTIFY THAT IT IS HIT BY POSSIBLE HURDLE

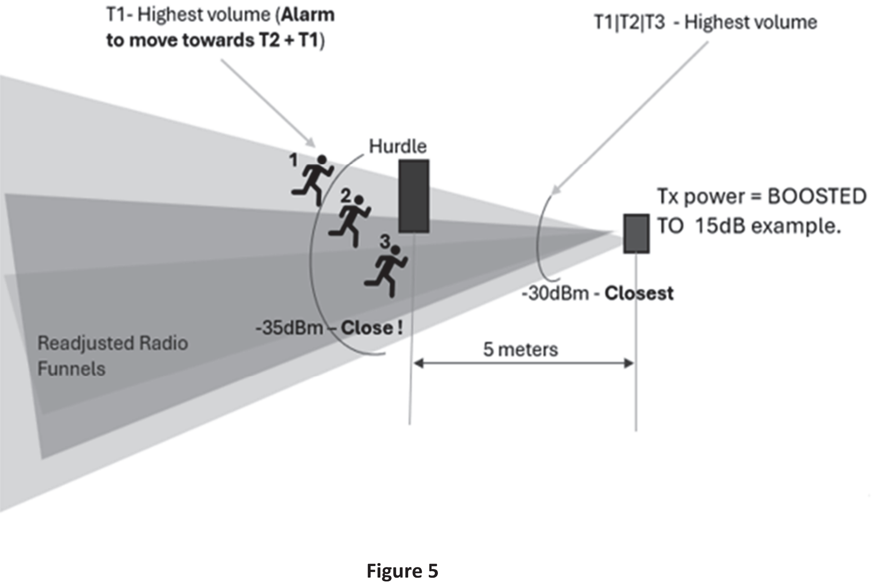

Figure 5 depicts a use case similar to that of Figure 2. However, in the embodiment of Figure 5, a hurdle (e.g., a physical obstruction) is between the user and the exit. In this embodiment, the transmitter may be configured to identify the presence of the hurdle (e.g., through a dynamic technique such as radar or LiDAR, or the transmitter may be preconfigured with a layout of the space such that the transmitter is aware of a hurdle such as a wall or desk). In this embodiment, the transmitter may be configured to adjust the beamforming of the Funnels in such a way that the Tone 2 and Tone 1 based funnels are directed at least partially away from the hurdle and still pointing to the Final Exit.

In the example of Figure 5, the adjustments may be performed in a variety of ways. One way may be that the transmit power of broadcast beams is adjusted in such a way that the above-described -35dBm threshold is available at the hurdle rather than the Exit. Another technique may be to adjust the above-described T2 and T3 beams in such a way that they are not available behind the hurdle.

Based on the above, the user in the position marked (1) (e.g., behind the hurdle) may only receive tone T1, and therefore be alerted to move to a position where the receiver receives tones T1, T2, and T3 (e.g., position 3). In this position, the user will not be blocked from the transmitter by the hurdle and can move forward towards the transmitter.

### EXAMPLE DEVICE

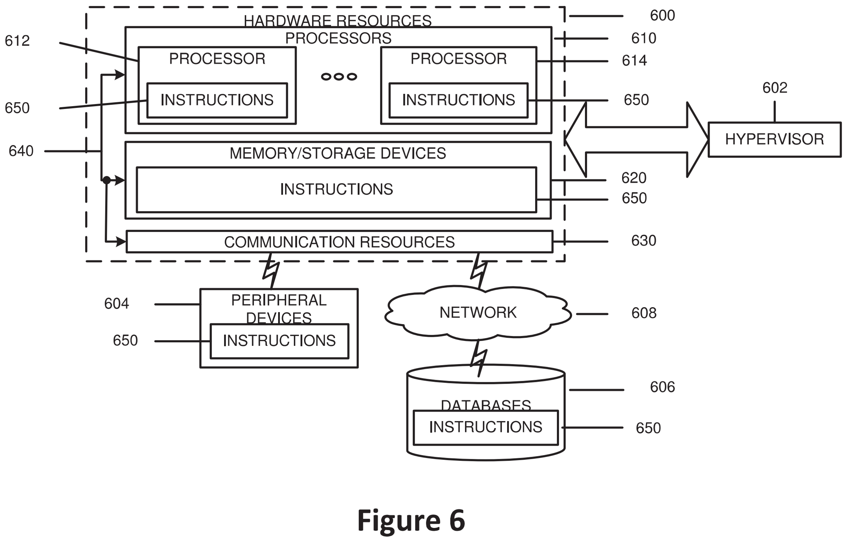

Figure 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600. The depicted hardware resource 600 may be, implement, or be part of an electronic device such as an above-described transmitter and/or receiver.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radiofrequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

### Example Procedures

In some embodiments, the electronic device(s), network(s), system(s), chip(s) or component(s), or portions or implementations thereof, of Figures 1-6, or some other figure herein, may be configured to perform one or more processes, techniques, or methods as described herein, or portions thereof.

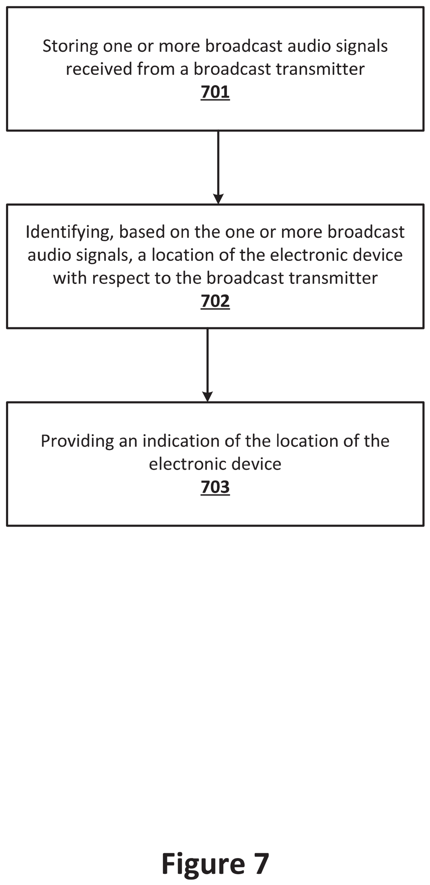

One such process is depicted in Figure 7. For example, the process may include or relate to a method to be performed by an electronic device. The process may include: storing, at 701, one or more broadcast audio signals received from a broadcast transmitter; identifying, at 702 based on the one or more broadcast audio signals, a location of the electronic device with respect to the broadcast transmitter; and providing, at 703, an indication of the location of the electronic device.

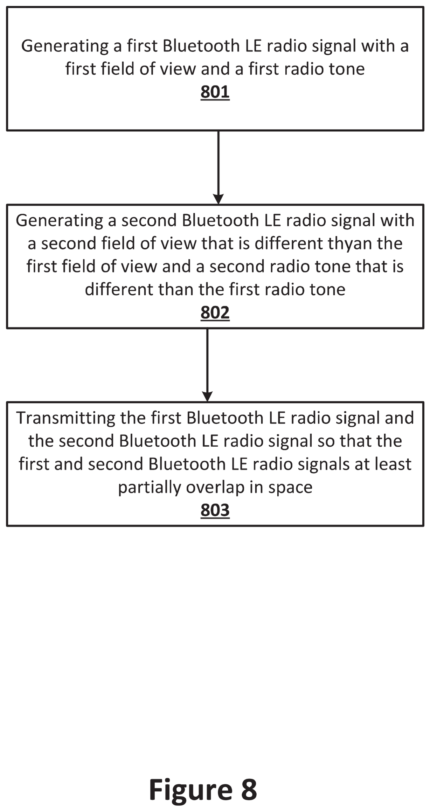

Another such process is depicted in Figure 8. The process of Figure 8 may include or relate to a method to be performed by a Bluetooth transmitter. The process may include: generating, at 801, a first Bluetooth low-energy (LE) radio signal with a first field of view and a first radio tone; generating, at 802, a second Bluetooth LE radio signal with a second field of view that is different than the first field of view and a second radio tone that is different than the first radio tone; and transmitting, at 803, the first Bluetooth LE radio signal and the second Bluetooth LE radio signal so that the first and second Bluetooth LE radio signals at least partially overlap in space.

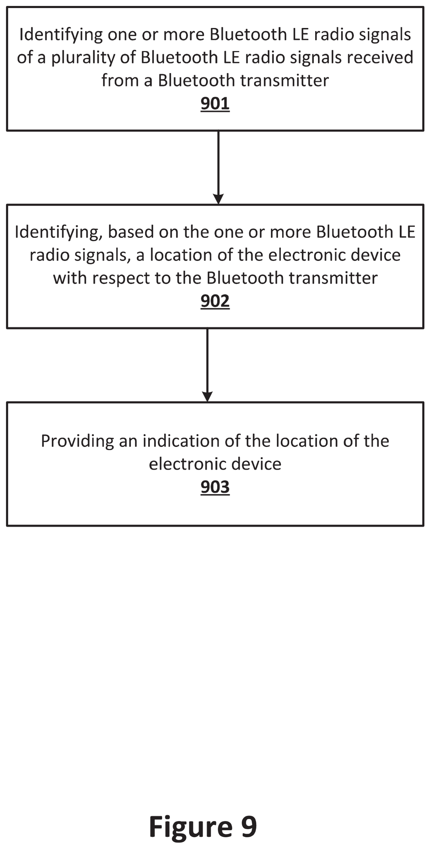

Another such process is depicted in Figure 9. The process of Figure 9 may include or relate to a method to be performed by a Bluetooth receiver. The process may include: identifying, at 901, one or more Bluetooth low-energy (LE) radio signals of a plurality of Bluetooth LE radio signals received from a Bluetooth transmitter; identifying, at 902 based on the one or more Bluetooth LE radio signals, a location of the electronic device with respect to the Bluetooth transmitter; and providing, at 903, an indication of the location of the electronic device.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 includes a method to be performed by an electronic device, wherein the method comprises: storing one or more broadcast audio signals received from a broadcast transmitter; identifying, based on the one or more broadcast audio signals, a location of the electronic device with respect to the broadcast transmitter; and providing an indication of the location of the electronic device.

Example 2 includes the method of example 1, and/or one or more other examples herein, wherein the indication of the location is provided to a user of the electronic device.

Example 3 includes the method of any one or more of examples 1-2, and/or one or more other examples herein, wherein the broadcast audio signals are Bluetooth signals with an audio component.

Example 4 includes the method of example 3, and/or one or more other examples herein, wherein the broadcast audio signals are Bluetooth low energy (LE) signals.

Example 5 includes the method of any one or more of examples 1-4, and/or one or more other examples herein, wherein one of the one or more broadcast audio signals is transmitted at a different time than another of the one or more broadcast audio signals.

Example 6 includes the method of example 5, and/or one or more other examples herein, wherein the one of the one or more broadcast audio signals does not overlap in time with the another of the one or more broadcast audio signals.

Example 7 includes the method of any one or more of examples 1-6, and/or one or more other examples herein, wherein respective ones of the one or more broadcast audio signals are broadcast with respective funnel patterns, and wherein a funnel pattern of one of the one or more broadcast audio signals is different than a funnel pattern of another of the one or more broadcast audio signals.

Example 8 includes the method of any one or more of examples 1-7, and/or one or more other examples herein, wherein one of the one or more broadcast audio signals is transmitted with a first tone or frequency characteristic and another of the one or more broadcast audio signals is transmitted with a second tone or frequency characteristic.

Example 9 includes the method of any one or more of examples 1-8, and/or one or more other examples herein, wherein the location of the electronic device with respect to the broadcast transmitter is a distance from the broadcast transmitter.

Example 10 includes the method of any one or more of examples 1-9, and/or one or more other examples herein, wherein the location of the electronic device with respect to the broadcast transmitter is a distance of the electronic device from a path to the broadcast transmitter.

Example 11 includes the method of any one or more of examples 1-10, and/or one or more other examples herein, wherein the method further comprises identifying the location of the electronic device with respect to the broadcast transmitter based on a number of the one or more broadcast audio signals that are received by the electronic device.

Example 12 includes the method of any one or more of examples 1-11, and/or one or more other examples herein, wherein a characteristic of a broadcast audio signal of the one or more broadcast audio signals changes based on a distance of the electronic device from the broadcast transmitter.

Example 13 includes the method of example 12, and/or one or more other examples herein, wherein the characteristic is an amplitude of the broadcast audio signal.

Example 14 includes the method of any one or more of examples 1-13, and/or one or more other examples herein, wherein a characteristic of a broadcast audio signal of the one or more broadcast audio signals changes based on a physical obstruction between the electronic device and the broadcast transmitter.

Example 15 includes the method of example 14, and/or one or more other examples herein, wherein the method further comprises providing an indication of the physical obstruction between the electronic device and the broadcast transmitter.

Example 16 includes the method of any one or more of examples 1-15, and/or one or more other examples herein, wherein the method further comprises wirelessly synchronizing with the broadcast transmitter regarding one or more frequency or time characteristics with which the one or more broadcast audio signals are to be transmitted.

Example 17 includes a method to be performed by a Bluetooth transmitter, one or more elements of a Bluetooth transmitter, and/or one or more electronic devices that include and/or implement a Bluetooth transmitter, wherein the method comprises: generating a first Bluetooth low-energy (LE) radio signal with a first field of view and a first radio tone; generating a second Bluetooth LE radio signal with a second field of view that is different than the first field of view and a second radio tone that is different than the first radio tone; and transmitting the first Bluetooth LE radio signal and the second Bluetooth LE radio signal so that the first and second Bluetooth LE radio signals at least partially overlap in space.

Example 18 includes the method of example 17, and/or one or more other examples herein, wherein the first Bluetooth LE radio signal is transmitted at a first time and the second Bluetooth LE radio signal is transmitted at a second time that is different than the first time.

Example 19 includes the method of example 18, and/or one or more other examples herein, wherein the first Bluetooth LE radio signal and the second Bluetooth LE radio signal do not overlap in time when transmitted.

Example 20 includes the method of any one or more of examples 17-19, and/or one or more other examples herein, wherein the first and second Bluetooth LE radio signals are transmitted with a funnel shape.

Example 21 includes the method of any one or more of examples 17-19, and/or one or more other examples herein, wherein the instructions are further to cause the Bluetooth transmitter to generate a third Bluetooth LE radio signal with a third field of view that is different than the first and second fields of view and a third radio tone that is different than the first and second radio tones.

Example 22 includes a method to be performed by a Bluetooth receiver, one or more elements of a Bluetooth receiver, and/or one or more electronic devices that include and/or implement a Bluetooth receiver, wherein the method comprises: identifying one or more Bluetooth low-energy (LE) radio signals of a plurality of Bluetooth LE radio signals received from a Bluetooth transmitter; identifying, based on the one or more Bluetooth LE radio signals, a location of the electronic device with respect to the Bluetooth transmitter; and providing an indication of the location of the electronic device.

Example 23 includes the method of example 22, and/or one or more other examples herein, wherein one of the plurality of Bluetooth LE radio signals is transmitted at a different time or with a different beamformed pattern or with a different frequency than another of the plurality of Bluetooth LE radio signals.

Example 24 may include an apparatus comprising means to perform one or more elements of a method described in or related to any of examples 1-23, or any other method or process described herein.

Example 25 may include one or more non-transitory computer-readable media comprising instructions to cause an electronic device, upon execution of the instructions by one or more processors of the electronic device, to perform one or more elements of a method described in or related to any of examples 1-23, or any other method or process described herein.

Example 26 may include an apparatus comprising logic, modules, or circuitry to perform one or more elements of a method described in or related to any of examples 1-23, or any other method or process described herein.

Example 27 may include a method, technique, or process as described in or related to any of examples 1-23, or portions or parts thereof.

Example 28 may include an apparatus comprising: one or more processors and one or more computer-readable media comprising instructions that, when executed by the one or more processors, cause the one or more processors to perform the method, techniques, or process as described in or related to any of examples 1-23, or portions thereof.

Example 29 may include a signal as described in or related to any of examples 1-23, or portions or parts thereof.

Example 30 may include a datagram, packet, frame, segment, protocol data unit (PDU), or message as described in or related to any of examples 1-23, or portions or parts thereof, or otherwise described in the present disclosure.

Example 31 may include a signal encoded with data as described in or related to any of examples 1-23, or portions or parts thereof, or otherwise described in the present disclosure.

Example 32 may include a signal encoded with a datagram, packet, frame, segment, protocol data unit (PDU), or message as described in or related to any of examples 1-23, or portions or parts thereof, or otherwise described in the present disclosure.

Example 33 may include an electromagnetic signal carrying computer-readable instructions, wherein execution of the computer-readable instructions by one or more processors is to cause the one or more processors to perform the method, techniques, or process as described in or related to any of examples 1-23, or portions thereof.

Example 34 may include a computer program comprising instructions, wherein execution of the program by a processing element is to cause the processing element to carry out the method, techniques, or process as described in or related to any of examples 1-23, or portions thereof.

Example 35 may include a signal in a wireless network as shown and described herein.

Example 36 may include a method of communicating in a wireless network as shown and described herein.

Example 37 may include a system for providing wireless communication as shown and described herein.

Example 38 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "information element" refers to a structural element containing one or more fields. The term "field" refers to individual contents of an information element, or a data element that contains content.

## Claims

1. An apparatus for use in an electronic device, comprising:
memory to store one or more broadcast audio signals received from a broadcast transmitter; and
one or more processors configured to:
identify, based on the one or more broadcast audio signals, a location of the electronic device with respect to the broadcast transmitter; and
provide an indication of the location of the electronic device.

2. The apparatus of claim 1, wherein the broadcast audio signals are Bluetooth signals with an audio component or wherein the broadcast audio signals are Bluetooth low energy (LE) signals.

3. The apparatus of claims 1 or 2, wherein one of the one or more broadcast audio signals is transmitted at a different time than another of the one or more broadcast audio signals, or wherein respective ones of the one or more broadcast audio signals are broadcast with respective funnel patterns, and wherein a funnel pattern of one of the one or more broadcast audio signals is different than a funnel pattern of another of the one or more broadcast audio signals.

4. The apparatus of claims 1, 2, or 3, wherein one of the one or more broadcast audio signals is transmitted with a first tone or frequency characteristic and another of the one or more broadcast audio signals is transmitted with a second tone or frequency characteristic.

5. The apparatus of claims 1, 2, 3, or 4, wherein the location of the electronic device with respect to the broadcast transmitter is a distance from the broadcast transmitter, or wherein the location of the electronic device with respect to the broadcast transmitter is a distance of the electronic device from a path to the broadcast transmitter.

6. The apparatus of claims 1, 2, 3, 4, or 5, wherein the one or more processors are further configured to identify the location of the electronic device with respect to the broadcast transmitter based on a number of the one or more broadcast audio signals that are received by the electronic device.

7. The apparatus of claims 1, 2, 3, 4, 5, or 6, wherein a characteristic of a broadcast audio signal of the one or more broadcast audio signals changes based on a distance of the electronic device from the broadcast transmitter, and wherein the characteristic is an amplitude of the broadcast audio signal.

8. The apparatus of claims 1, 2, 3, 4, 5, 6, or 7, wherein a characteristic of a broadcast audio signal of the one or more broadcast audio signals changes based on a physical obstruction between the electronic device and the broadcast transmitter, and wherein the one or more processors are further configured to provide an indication of the physical obstruction between the electronic device and the broadcast transmitter.

9. The apparatus of claims 1, 2, 3, 4, 5, 6, 7, or 8, wherein the one or more processors are further to wirelessly synchronize with the broadcast transmitter regarding one or more frequency or time characteristics with which the one or more broadcast audio signals are to be transmitted.

10. One or more non-transitory computer-readable media comprising instructions that, upon execution of the instructions by one or more processors of an electronic device, are to cause a Bluetooth transmitter to:
generate a first Bluetooth low-energy (LE) radio signal with a first field of view and a first radio tone;
generate a second Bluetooth LE radio signal with a second field of view that is different than the first field of view and a second radio tone that is different than the first radio tone; and
transmit the first Bluetooth LE radio signal and the second Bluetooth LE radio signal so that the first and second Bluetooth LE radio signals at least partially overlap in space.

11. The one or more non-transitory computer-readable media of claim 15, wherein the first Bluetooth LE radio signal is transmitted at a first time and the second Bluetooth LE radio signal is transmitted at a second time that is different than the first time.

12. The one or more non-transitory computer-readable media of claims 10 or 11, wherein the first and second Bluetooth LE radio signals are transmitted with a funnel shape.

13. The one or more non-transitory computer-readable media of claims 10 or 11, wherein the instructions are further to cause the Bluetooth transmitter to generate a third Bluetooth LE radio signal with a third field of view that is different than the first and second fields of view and a third radio tone that is different than the first and second radio tones.

14. A method performed by a Bluetooth receiver, comprising:
identifying one or more Bluetooth low-energy (LE) radio signals of a plurality of Bluetooth LE radio signals received from a Bluetooth transmitter;
identifying, based on the one or more Bluetooth LE radio signals, a location of the electronic device with respect to the Bluetooth transmitter; and
providing an indication of the location of the electronic device.

15. The method of claim 13, further comprising transmitting one of the plurality of Bluetooth LE radio signals at a different time or with a different beamformed pattern or with a different frequency than another of the plurality of Bluetooth LE radio signals.
